# EUROPÄISCHE PATENTSCHRIFT

(11) **EP 3 180 202 B1**
(45) Veröffentlichungstag und Bekanntmachung des Hinweises auf die Patenterteilung: **18.04.2018**
(21) Anmeldenummer: 15735919.1
(22) Anmeldetag: 06.07.2015
(51) Int. Cl.: B60G 9/00, B60B 35/00

(54) **AUFHÄNGEVORRICHTUNG FÜR EINE FAHRZEUGACHSE EINES FAHRZEUGS**
SUSPENSION DEVICE FOR A VEHICLE AXLE OF A VEHICLE
DISPOSITIF DE SUSPENSION D'UN ESSIEU D'UN VÉHICULE

(30) Priorität: 11.08.2014 DE 102014215876
(43) Veröffentlichungstag der Anmeldung: 21.06.2017
(73) Patentinhaber: ZF Friedrichshafen AG, 88046 Friedrichshafen (DE)
(72) Erfinder: HELM, Eike, 49356 Diepholz (DE)
(86) Internationale Anmeldenummer: PCT/EP2015/065277
(87) Internationale Veröffentlichungsnummer: WO 2016/023677

(56) Entgegenhaltungen:
- EP-A2- 1 486 359
- WO-A1-99/30914
- WO-A1-03/093039
- DE-A1-102011 079 654
- JP-A- H07 132 721
- JP-A- H08 207 536
- US-A- 3 332 702
- US-A- 3 768 584

## Beschreibung

Die Erfindung betrifft eine Aufhängevorrichtung für eine Fahrzeugachse eines Fahrzeugs, mit einer mit zwei zueinander beabstandeten rahmenseitigen Anbindungsstellen um eine Schwenkachse schwenkbar an einem Fahrzeugrahmen des Fahrzeugs gelagerten und aus Faserverbundwerkstoff bestehenden Achslenkeranordnung, die mit zwei im Abstand zur Schwenkachse vorgesehenen und zueinander beabstandeten achsseitigen Haupt-Anbindungsstellen fest mit einem Achskörper der Fahrzeugachse verbunden ist.

Aus der DE 10 2011 079 654 A1 ist ein Vierpunktlenker für eine Achsaufhängung einer Starrachse eines Nutzfahrzeugs bekannt, der vier Lageraufnahmen, von denen zwei Lageraufnahmen an der Fahrzeugachse und zwei Lageraufnahmen am Fahrzeugrahmen anlenkbar sind, und einen tordierbaren, dem durch die Lageraufnahmen gebildeten Trapez im Wesentlichen einbeschriebenen Lenkerkörper umfasst, der aus einer Faserverbundanordnung gebildet ist. Ferner ist aus der EP 1 486 359 A2 eine Nutzfahrzeug-Achsaufhängung mit zwei aus Faserverbundwerkstoff bestehenden Lenkerarmen bekannt, durch welche sich die Achse hindurch erstreckt, die mit den Lenkerarmen verklebt ist.

Insbesondere bei der die beiden separaten Lenkerarme umfassenden Achsaufhängung gemäß der EP 1 486 359 A2 besteht das Problem, dass die Konstruktion aus Faserverbundwerkstoff durch größere Kräfte und Momente, die im Betrieb des Nutzfahrzeugs auftreten können, im Verbindungsbereich zwischen Lenker und Achse überlastet werden kann. Eine weitere relevante Achslenkeranordnung ist in der JP H07 132721 A beschrieben.

Ausgehend hiervon liegt der Erfindung die Aufgabe zugrunde, bei einer Aufhängevorrichtung der eingangs genannten Art, die Gefahr einer Überlastung der achsseitigen Anbindungsstellen vermeiden oder zumindest reduzieren zu können. Diese Aufgabe wird durch eine Aufhängevorrichtung nach Anspruch 1 gelöst. Bevorzugte Weiterbildungen der Aufhängevorrichtung sind in den Unteransprüchen und in der nachfolgenden Beschreibung gegeben.

Die Aufhängevorrichtung für eine Fahrzeugachse eines Fahrzeugs weist eine mit zwei zueinander beabstandeten rahmenseitigen Anbindungsstellen um eine Schwenkachse schwenkbar an einem Fahrzeugrahmen des Fahrzeugs gelagerte und aus Faserverbundwerkstoff bestehende Achslenkeranordnung auf, die mit zwei im Abstand zur Schwenkachse vorgesehenen und zueinander beabstandeten achsseitigen Haupt-Anbindungsstellen fest mit einem Achskörper der Fahrzeugachse verbunden ist, wobei die Achslenkeranordnung zusätzlich mit einer oder wenigstens einer achsseitigen Neben-Anbindungsstelle fest mit dem Achskörper verbunden ist.

Bei dieser Aufhängevorrichtung können Kräfte und/oder Momente nicht nur durch die Haupt-Anbindungsstellen, sondern auch durch die Neben-Anbindungsstelle von dem Achskörper in die Achslenkeranordnung eingeleitet werden, was zu einer Entlastung der Haupt-Anbindungsstellen führt. Hierdurch kann die Gefahr einer Überlastung der achsseitigen Anbindungsstellen vermieden oder zumindest reduziert werden.

Die Fahrzeugachse umfasst bevorzugt mehrere, insbesondere zwei oder wenigstens zwei, Fahrzeugräder. Vorteilhaft steht das Fahrzeug und/oder die Fahrzeugachse mit ihren Fahrzeugrädern auf einem Untergrund auf.

Bei dem Fahrzeug handelt es sich bevorzugt um ein Landfahrzeug, insbesondere um ein Landfahrzeug mit Rädern. Vorteilhaft handelt es sich bei dem Fahrzeug um ein Nutzfahrzeug. Beispielsweise handelt es sich bei dem Fahrzeug um ein Kraftfahrzeug, um einen Anhänger oder um einen Sattelauflieger.

Dem Fahrzeug ist bevorzugt eine Fahrzeuglängsrichtung, eine Fahrzeugquerrichtung und eine Fahrzeughochrichtung zugeordnet. Die Fahrzeuglängsrichtung, die Fahrzeugquerrichtung und die Fahrzeughochrichtung verlaufen insbesondere senkrecht zueinander und bilden vorzugsweise in dieser Reihenfolge ein Rechtssystem. Ferner ist dem Fahrzeug bevorzugt eine Fahrtrichtung zugeordnet, die vorzugsweise in Fahrzeuglängsrichtung verläuft. Insbesondere handelt es sich bei der Fahrtrichtung um die gewöhnliche Vorwärtsfahrtrichtung des Fahrzeugs. Die Fahrzeuglängsrichtung verläuft vorzugsweise horizontal. Ferner verläuft die Fahrzeugquerrichtung bevorzugt horizontal. Die Fahrzeughochrichtung verläuft insbesondere vertikal. Begriffe wie oben, oberhalb, über, auf, unten, unter, unterhalb etc. beziehen sich insbesondere auf die Fahrzeughochrichtung. Begriffe wie vorne, vor, hinten, hinter etc. beziehen sich insbesondere auf die Fahrzeuglängsrichtung.

Die rahmenseitigen Anbindungsstellen sind vorzugsweise in Richtung der Schwenkachse und/oder in Fahrzeugquerrichtung zueinander beabstandet. Ferner sind die achsseitigen Haupt-Anbindungsstellen bevorzugt in einer zur Schwenkachse parallelen Richtung und/oder in Fahrzeugquerrichtung zueinander beabstandet. Auch verläuft die Schwenkachse vorzugsweise in Fahrzeugquerrichtung.

Gemäß einer Weiterbildung ist die achsseitige Neben-Anbindungsstelle, vorzugsweise bezüglich der oder einer zur Schwenkachse parallelen Richtung, insbesondere mittig, zwischen den beiden achsseitigen Haupt-Anbindungsstellen vorgesehen. Bevorzugt ist die achsseitige Neben-Anbindungsstelle in Fahrzeugquerrichtung, insbesondere mittig, zwischen den beiden achsseitigen Haupt-Anbindungsstellen vorgesehen. Die beiden Haupt-Anbindungsstellen bilden vorzugsweise äußere und/oder seitliche achsseitige Anbindungsstellen. Die Neben-Anbindungsstelle bildet bevorzugt eine innere und/oder mittlere achsseitige Anbindungsstelle.

Insbesondere umfasst die Achslenkeranordnung die rahmenseitigen Anbindungsstellen und/oder die achsseitigen Haupt-Anbindungsstellen und/oder die oder die wenigstens eine Neben-Anbindungsstelle. Beispielsweise ist die Achslenkeranordnung mit der Neben-Anbindungsstelle an den Achskörper angelenkt, z.B. mittels eines Gelenks, Gleitlagers oder Gummilagers. Bevorzugt ist die Achslenkeranordnung mit der Neben-Anbindungsstelle aber starr mit dem Achskörper verbunden. Hierdurch kann das Einleiten von Kräften und/oder Momenten durch die Neben-Anbindungsstelle von dem Achskörper in die Achslenkeranordnung begünstigt werden. Ferner ist die Achslenkeranordnung mit den Haupt-Anbindungsstellen z.B. an dem Achskörper angelenkt, beispielsweise durch Gelenke, Gleitlager oder Gummilager. Bevorzugt ist die Achslenkeranordnung mit den Haupt-Anbindungsstellen aber starr mit dem Achskörper verbunden. Insbesondere ist die Achslenkeranordnung mit den oder im Bereich der Haupt-Anbindungsstellen mit dem Achskörper verschraubt. An den rahmenseitigen Anbindungsstellen weist die Achslenkeranordnung vorzugsweise Löcher auf, in denen z.B. rahmenfeste Lagerelemente, wie beispielsweise Bolzen, einliegen, an denen die Achslenkeranordnung um die Schwenkachse schwenkbar gelagert ist. In diesem Fall bilden die rahmenfesten Lagerelemente zusammen mit rahmenseitigen Anbindungsstellen insbesondere Gleitlager. Es ist aber auch möglich, dass in diesen Löchern Gelenke, Gleitlager oder Gummilager sitzen, durch welche die Achslenkeranordnung um die Schwenkachse schwenkbar am Fahrzeugrahmen gelagert ist.

Bevorzugt ist die Verbindung des Achskörpers mit dem Fahrzeugrahmen durch die Achslenkeranordnung weitgehend oder vollständig ohne Gummilager realisiert. In diesem Fall sind die sonst durch Gummilager erfüllten Steifigkeits- und Festigkeitsanforderungen insbesondere weitgehend oder vollständig durch die mechanischen Eigenschaften der aus Verbundwerkstoff bestehenden Achslenkeranordnung erfüllt. Die mechanischen Eigenschaften der aus Verbundwerkstoff bestehenden Achslenkeranordnung sind insbesondere anisotrop oder orthotrop. Somit weist die Achslenkeranordnung in unterschiedlichen Richtungen vorzugsweise unterschiedliche Festigkeiten und/oder unterschiedliche Elastizitätsmodule auf. Ferner ist es möglich, dass Teilelemente der Achslenkeranordnung nicht aus Faserverbundwerkstoff, sondern aus einem oder mehreren anderen Werkstoffen bestehen. Beispielsweise kann die Achslenkeranordnung metallische Stütz- und/oder Verstärkungselemente umfassen, die z.B. in den Faserverbundwerkstoff der Achslenkeranordnung eingebettet und/oder an dieser befestigt sind. Hierdurch ist es möglich, die Steifigkeit der Achslenkeranordnung gezielt zu beeinflussen.

Die Achslenkeranordnung ist insbesondere spiegelsymmetrisch aufgebaut, vorzugsweise bezüglich einer in Fahrzeuglängsrichtung und in Fahrzeughochrichtung verlaufenden Längs-Hoch-Ebene des Fahrzeugs. Bevorzugt ist die Achslenkeranordnung bezüglich einer quer zur Schwenkachse und durch die Neben-Anbindungsstelle verlaufenden Symmetrieebene spiegelsymmetrisch ausgebildet, die insbesondere mit der Längs-Hoch-Ebene des Fahrzeugs identisch ist oder mit dieser zusammenfällt.

Gemäß einer ersten Variante ist die Achslenkeranordnung einteilig ausgebildet. Darunter ist insbesondere zu verstehen, dass die Achslenkeranordnung einen die rahmenseitigen und die achsseitigen Anbindungsstellen umfassenden, einteiligen Körper aus Faserverbundwerkstoff umfasst oder bildet.

Gemäß einer zweiten Variante ist die Achslenkeranordnung aus zwei oder wenigstens zwei separaten Achslenkerteilen zusammengesetzt. Bevorzugt sind die Achslenkerteile bezüglich der oder einer quer zur Schwenkachse und durch die Neben-Anbindungsstelle verlaufenden Symmetrieebene und/oder bezüglich der oder einer in Fahrzeuglängsrichtung und in Fahrzeughochrichtung verlaufenden Längs-Hoch-Ebene des Fahrzeugs zueinander spiegelsymmetrisch ausgebildet.

Gemäß einer Ausgestaltung weist die Achslenkeranordnung zwei zueinander beabstandete Lenkerarme auf, die sich insbesondere quer zur Schwenkachse erstrecken. Bevorzugt erstrecken sich die Lenkerarme in oder im Wesentlichen in Fahrzeuglängsrichtung. Vorteilhaft sind die Lenkerarme in Richtung der Schwenkachse und/oder in Fahrzeugquerrichtung zueinander beabstandet. Insbesondere sind die Lenkerarme bezüglich der oder einer quer zur Schwenkachse und durch die Neben-Anbindungsstelle verlaufenden Symmetrieebene und/oder bezüglich der oder einer in Fahrzeuglängsrichtung und in Fahrzeughochrichtung verlaufenden Längs-Hoch-Ebene des Fahrzeugs zueinander spiegelsymmetrisch ausgebildet. Jeder der Lenkerarme umfasst bevorzugt eine der rahmenseitigen Anbindungsstellen und eine der achsseitigen Haupt-Anbindungsstellen.

Ferner weist die Achslenkeranordnung bevorzugt zwei Streben auf, die sich jeweils von einem der Lenkerarme bis zu der oder einer achsseitigen Neben-Anbindungsstelle erstrecken, mit welcher die Achslenkeranordnung fest mit dem Achskörper verbunden ist. Jeder der Lenkerarme geht dabei vorzugsweise in die jeweilige Strebe über und/oder ist vorzugsweise fest mit der jeweiligen Strebe verbunden. Insbesondere verlaufen die Streben schräg oder quer zu den Lenkeramen. Bevorzugt verlaufen die Streben schräg oder quer zur Fahrzeuglängsrichtung und/oder schräg oder parallel zur Fahrzeugquerrichtung und/oder schräg oder quer zur Fahrzeughochrichtung. Vorzugsweise sind die Streben bezüglich der oder einer quer zur Schwenkachse und durch die Neben-Anbindungsstelle verlaufenden Symmetrieebene und/oder bezüglich der oder einer in Fahrzeuglängsrichtung und in Fahrzeughochrichtung verlaufenden Längs-Hoch-Ebene des Fahrzeugs zueinander spiegelsymmetrisch ausgebildet. Jede der Streben geht bevorzugt in die achsseitige Neben-Anbindungsstelle oder in einen Teil derselben über und/oder ist vorzugsweise fest mit der achsseitigen Neben-Anbindungsstelle oder mit einem Teil derselben verbunden. Vorteilhaft gehen die Streben im Bereich der Neben-Anbindungsstelle ineinander über und/oder die Streben sind im Bereich der Neben-Anbindungsstelle vorteilhaft fest miteinander verbunden. Bei der zweiten Variante umfassen die Achslenkerteile bevorzugt jeweils einen der Lenkerarme und eine der Streben. Vorteilhaft umfassen die Achslenkerteile bei der zweiten Variante jeweils auch einen Teil oder einen der Teile der achsseitigen Neben-Anbindungsstelle. Insbesondere umfassen die Streben bei der zweiten Variante jeweils einen Teil oder einen der Teile der achsseitigen Neben-Anbindungsstelle. Die Teile der achsseitigen Neben-Anbindungsstelle gehen bevorzugt ineinander über und/oder sind fest, insbesondere starr, miteinander verbunden und/oder sind fest, insbesondere starr, mit dem Achskörper verbunden. Vorteilhaft liegen Teile der achsseitigen Neben-Anbindungsstelle nebeneinander, insbesondere direkt nebeneinander. Zwischen den Lenkerarmen weist die Achslenkeranordnung bevorzugt ausschließlich die Streben und die oder die wenigstens eine achsseitige Neben-Anbindungsstelle und/oder deren Teile auf.

Gemäß einer Ausgestaltung ist jede der Streben mit dem jeweiligen Lenkerarm in einem Bereich verbunden, der einen Abstand zur achsseitigen Haupt-Anbindungsstelle des jeweiligen Lenkerarms aufweist. Bevorzugt ist jede der Streben mit dem jeweiligen Lenkerarm in einem Bereich verbunden, der zwischen der achsseitigen Haupt-Anbindungsstelle und der rahmenseitigen Anbindungsstelle des jeweiligen Lenkerarms liegt.

Die Achslenkeranordnung weist an den Haupt-Anbindungsstellen vorzugsweise Durchgangslöcher auf, durch welche sich der Achskörper hindurch erstreckt. Insbesondere sind die Durchgangslöcher in den Lenkerarmen vorgesehen.

Bei der Fahrzeugachse kann es sich um eine angetriebene oder um eine nicht angetriebene Achse handeln. Insbesondere umfasst die Fahrzeugachse zwei oder wenigstens zwei Fahrzeugräder, die drehbar am Achskörper gelagert sind. In einem einfachen Fall ist der Achskörper z.B. lediglich durch eine Stange gebildet, die beispielsweise aus Vollmaterial oder aus einem Rohr besteht. Der Achskörper kann aber auch ein Gehäuse umfassen, in dem z.B. ein Getriebe vorgesehen ist, insbesondere wenn es sich bei der Fahrzeugachse um eine angetriebene Achse handelt. Die achsseitige Neben-Anbindungsstelle ist, insbesondere bezüglich der Fahrzeughochrichtung, vorzugsweise auf oder oben auf dem Achskörper vorgesehen.

Gemäß einer Ausgestaltung ist der Faserverbundwerkstoff der Achslenkeranordnung ein Faser-Kunststoff-Verbund und/oder ein faserverstärkter Kunststoff. Bevorzugt umfasst der Faserverbundwerkstoff eine Matrix aus Kunststoff, in die Fasern eingebettet sind. Bei dem Kunststoff handelt es sich z.B. um einen duroplastischen oder thermoplastischen Kunststoff. Insbesondere basiert die Matrix auf einem Epoxidharz, Polyesterharz und/oder Polyurethanharz. Der Kunststoff ist somit bevorzugt ein Epoxidharz, ein Polyesterharz und/oder ein Polyurethanharz. Bei den Fasern handelt es sich bevorzugt um Glasfasern und/oder Kohlefasern.

Gemäß einer Weiterbildung ist wenigstens ein an dem Achskörper befestigter zusätzlicher Längslenker vorgesehen, der im Abstand zum Achskörper am Fahrzeugrahmen angelenkt und/oder gelagert, insbesondere schwenkbar gelagert, ist. Vorteilhaft sind zwei oder wenigstens zwei an dem Achskörper befestigte zusätzliche Achslenker vorgesehen, die im Abstand zum Achskörper am Fahrzeugrahmen angelenkt und/oder gelagert, insbesondere schwenkbar gelagert, sind. Der oder die zusätzlichen Achslenker sind, insbesondere bezüglich der Fahrzeughochrichtung, bevorzugt unter oder unterhalb der Achslenkeranordnung angeordnet. Bei dem oder den zusätzlichen Achslenkern handelt es sich bevorzugt um untere Achslenker. Ferner handelt es sich bei der Achslenkeranordnung bevorzugt um eine obere Achslenkeranordnung. Vorteilhaft bilden der oder die zusätzlichen Achslenker Längslenker.

Gemäß einer Ausgestaltung ist wenigstens ein Dämpfer vorgesehen, mittels welchem der Achskörper und/oder die Achslenkeranordnung mit dem Fahrzeugrahmen verbunden ist. Vorteilhaft sind zwei oder wenigstens zwei Dämpfer vorgesehen, mittels welchen der Achskörper und/oder die Achslenkeranordnung mit dem Fahrzeugrahmen verbunden ist.

Gemäß einer Weiterbildung ist wenigstens eine Fahrzeugfeder vorgesehen, mittels welcher der Achskörper und/oder die Achslenkeranordnung an dem Fahrzeugrahmen abgestützt ist. Vorteilhaft sind zwei oder wenigstens zwei Fahrzeugfedern vorgesehen, mittels welchen der Achskörper und/oder die Achslenkeranordnung an dem Fahrzeugrahmen abgestützt ist. Insbesondere umfassen die Lenkerarme jeweils einen Federaufnahmebereich, auf oder an dem vorzugsweise eine Fahrzeugfeder oder eine der Fahrzeugfedern angeordnet ist, die sich bevorzugt zwischen dem jeweiligen Lenkerarm und dem Fahrzeugrahmen erstreckt. Die achsseitigen Haupt-Anbindungsstellen jedes Lenkerarms sind vorteilhaft zwischen der rahmenseitigen Anbindungsstelle und dem Federaufnahmebereich des jeweiligen Lenkerarms vorgesehen.

Die Erfindung betrifft ferner die Verwendung einer Aufhängevorrichtung zur Aufhängung einer Fahrzeugachse eines Fahrzeugs, wobei die Aufhängevorrichtung eine mit zwei zueinander beabstandeten rahmenseitigen Anbindungsstellen um eine Schwenkachse schwenkbar an einem Fahrzeugrahmen des Fahrzeugs gelagerte und aus Faserverbundwerkstoff bestehende Achslenkeranordnung aufweist, die mit zwei im Abstand zur Schwenkachse vorgesehenen und zueinander beabstandeten achsseitigen Haupt-Anbindungsstellen fest mit einem Achskörper der Fahrzeugachse verbunden ist oder wird, und wobei die Achslenkeranordnung zusätzlich mit einer oder wenigstens einer achsseitigen Neben-Anbindungsstelle fest mit dem Achskörper verbunden ist oder wird. Bei dieser Aufhängevorrichtung handelt es sich insbesondere um die zuvor beschriebene Aufhängevorrichtung, sodass sie gemäß allen in diesem Zusammenhang erläuterten Ausgestaltungen weitergebildet sein kann.

Die Erfindung betrifft auch ein Fahrzeug mit einem Fahrzeugrahmen und wenigstens einer Fahrzeugachse, die mittels einer Aufhängevorrichtung mit dem Fahrzeugrahmen verbunden ist, wobei die Aufhängevorrichtung eine mit zwei zueinander beabstandeten rahmenseitigen Anbindungsstellen um eine Schwenkachse schwenkbar am Fahrzeugrahmen gelagerte und aus Faserverbundwerkstoff bestehende Achslenkeranordnung aufweist, die mit zwei im Abstand zur Schwenkachse vorgesehenen und zueinander beabstandeten achsseitigen Haupt-Anbindungsstellen fest mit einem Achskörper der Fahrzeugachse verbunden ist, wobei die Achslenkeranordnung zusätzlich mit einer oder wenigstens einer achsseitigen Neben-Anbindungsstelle fest mit dem Achskörper verbunden ist. Bei dieser Aufhängevorrichtung handelt es sich insbesondere um die zuvor beschriebene Aufhängevorrichtung, sodass sie gemäß allen in diesem Zusammenhang erläuterten Ausgestaltungen weitergebildet sein kann.

Die Erfindung wird nachfolgend anhand bevorzugter Ausführungsformen unter Bezugnahme auf die Zeichnung beschrieben. In der Zeichnung zeigen:
- Fig. 1: eine Seitenansicht eines Fahrzeugs mit einer lenkbaren Vorderachse und einer angetriebenen Hinterachse,
- Fig. 2: eine perspektivische Teilansicht einer ersten Ausführungsform einer Aufhängevorrichtung, mittels welcher die Hinterachse mit dem Fahrzeugrahmen verbunden ist,
- Fig. 3: eine perspektivische Ansicht einer aus Fig. 2 ersichtlichen Achslenkeranordnung,
- Fig. 4: einen Schnitt durch einen Lenkerarm der Achslenkeranordnung entlang der aus

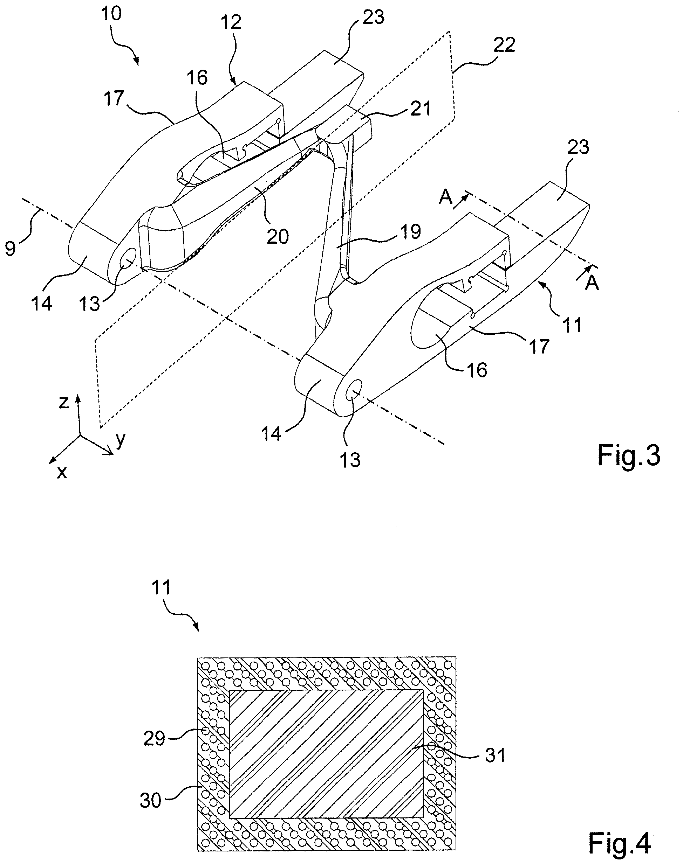

- Fig. 3: ersichtlichen Schnittlinie A-A und

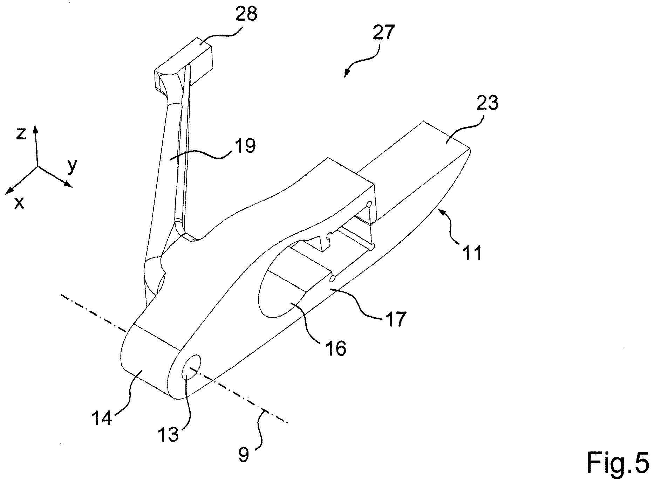

- Fig. 5: einen Achslenkerteil einer Achslenkeranordnung einer Aufhängevorrichtung gemäß einer zweiten Ausführungsform.

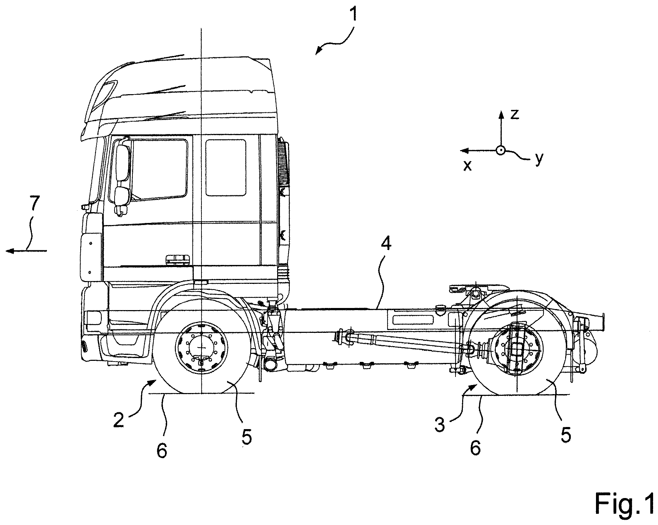

Aus Fig. 1 ist eine Seitenansicht eines als Kraftfahrzeug ausgebildeten Fahrzeugs 1 mit zwei Fahrzeugachsen 2 und 3 ersichtlich, wobei es sich bei der Achse 2 um eine lenkbare Vorderachse und bei der Achse 3 um eine angetriebene Hinterachse handelt. Das Fahrzeug 1 umfasst einen Fahrzeugrahmen 4, an dem die Achsen 2 und 3 aufgehängt sind, deren Fahrzeugräder 5 auf einem Untergrund 6 aufstehen. Ferner sind dem Fahrzeug 1 eine Fahrzeuglängsrichtung x, eine Fahrzeugquerrichtung y und eine Fahrzeughochrichtung z zugeordnet. Die Fahrzeugquerrichtung y erstreckt sich dabei aus der Zeichenebene heraus. Auch ist die in Fahrzeuglängsrichtung x verlaufende Vorwärtsfahrtrichtung 7 des Fahrzeugs 1 dargestellt.

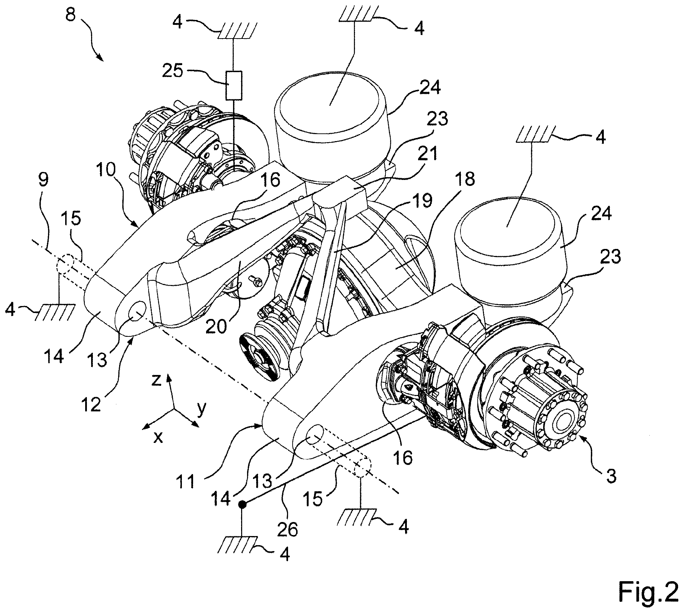

Aus Fig. 2 ist eine teilweise Ansicht einer Aufhängevorrichtung 8 gemäß einer ersten Ausführungsform ersichtlich, wobei die in Fig. 2 lediglich teilweise dargestellte Hinterachse 3 mittels der Aufhängevorrichtung 8 am Fahrzeugrahmen 4 aufgehängt ist. Die Aufhängevorrichtung 8 umfasst eine um eine Schwenkachse 9 schwenkbare Achslenkeranordnung 10 mit zwei sich in Fahrzeuglängsrichtung x erstreckenden Lenkerarmen 11 und 12, die jeweils eine mit einem sich in Fahrzeugquerrichtung y erstreckenden Durchgangsloch 13 versehene rahmenseitige Anbindungsstelle 14 aufweisen. In diesen Löchern 13 liegen sich in Richtung der Schwenkachse 9 erstreckende, rahmenfeste Lagerelemente 15 in Form von Bolzen (gestrichelt angedeutet), um welche die Lenkerarme 11 und 12 schwenkbar sind. Die Achslenkeranordnung 10 ist somit um die Schwenkachse 9 schwenkbar am Fahrzeugrahmen 4 gelagert. Eine perspektivische Einzeldarstellung der Achslenkeranordnung 10 ist aus Fig. 3 ersichtlich.

Im Abstand zur Schwenkachse 9 weisen die Lenkerarme 11 und 12 jeweils eine mit einem sich in Fahrzeugquerrichtung y erstreckenden Durchgangsloch 16 versehene achsseitige Anbindungsstelle 17 auf, wobei sich ein Achskörper 18 der Fahrzeugachse 3 durch die Durchgangslöcher 16 hindurch erstreckt und mit den Lenkerarmen 11 und 12 im Bereich der Anbindungsstellen 17 verschraubt ist. Ferner sind die Lenkerarme 11 und 12 auf ihren einander zugewandten Seiten jeweils mit einer Strebe 19 bzw. 20 verbunden, wobei sich die Streben 19 und 20 von den Lenkerarmen 11 und 12 bis zu einer achsseitigen Anbindungsstelle 21 erstrecken, mit welcher die Achslenkeranordnung 10 starr auf dem Achskörper 18 befestigt ist. Die in Fahrzeugquerrichtung y mittig zwischen den achsseitigen Anbindungsstellen 17 gelegene achsseitige Anbindungsstelle 21 wird auch als achsseitige Neben-Anbindungsstelle bezeichnet, wobei die achsseitigen Anbindungsstellen 17 auch als achsseitige Haupt-Anbindungsstellen bezeichnet werden. Die Streben 19 und 20 erstrecken sich jeweils schräg zur Fahrzeuglängsrichtung x, laufen von den Lenkerarmen 11 und 12 aus aufeinander zu und gehen an der achsseitigen Neben-Anbindungsstelle 21 ineinander über, sodass die Achslenkeranordnung 10 ein einstückiges Bauteil bildet. Ferner ist die Achslenkeranordnung 10 bezüglich einer sich in Fahrzeuglängsrichtung x und in Fahrzeughochrichtung z erstreckenden und durch die achsseitige Neben-Anbindungsstelle 21 verlaufenden Längs-Hoch-Ebene 22 spiegelsymmetrisch ausgebildet.

Die Lenkerarme 11 und 12 weisen an ihren den jeweiligen rahmenseitigen Anbindungsstellen 14 abgewandten Enden jeweils einen Federaufnahmebereich 23 auf, der eine Fahrzeugfeder 24 trägt, mittels welcher der jeweilige Lenkerarm am Fahrzeugrahmen 4 federnd abgestützt ist. Zusätzlich ist der Achskörper 18 mit dem Fahrzeugrahmen 4 insbesondere über Dämpfer 25 verbunden, von denen lediglich einer schematisch angedeutet ist. Ferner ist der Achskörper 18 an den Fahrzeugrahmen 4 bevorzugt über zusätzliche Längslenker 26 angelenkt, die insbesondere untere Längslenker bilden und von denen lediglich einer schematisch angedeutet ist. Die Achslenkeranordnung 10 bildet somit insbesondere eine obere Lenkeranordnung.

Bezüglich der Fahrzeuglängsrichtung x und/oder der Fahrtrichtung 7 sind bei der ersten Ausführungsform die achsseitigen Haupt-Anbindungsstellen 17 hinter den rahmenseitigen Anbindungsstellen 14 vorgesehen. Ferner sind die Federaufnahmebereiche 23 hinter den achsseitigen Haupt-Anbindungsstellen 17 vorgesehen. Alternativ ist eine umgekehrte Aufhängung möglich, wonach die achsseitigen Haupt-Anbindungsstellen 17 vor den rahmenseitigen Anbindungsstellen 14 vorgesehen sind. In diesem Fall sind die Federaufnahmebereiche 23 insbesondere vor den achsseitigen Haupt-Anbindungsstellen 17 vorgesehen.

Aus Fig. 4 ist ein Schnitt durch den Lenkerarm 11 entlang der aus Fig. 3 ersichtlichen Schnittlinie A-A ersichtlich, der aus einem mit Fasern 29 verstärkten Kunststoff 30 besteht, wobei das Bezugszeichen 31 einen Kern bezeichnet, der von dem faserverstärktem Kunststoff umgeben ist und z.B. aus einem Schaumstoff besteht. Der Kern 31 ist aus Herstellungsgründen vorhanden und wird auch als verlorener Kern bezeichnet, da er nach der Fertigstellung der Achslenkeranordnung 10 in dieser verbleibt. Alternativ ist z.B. die gesamte aus Fig. 4 ersichtliche Schnittfläche mit faserverstärktem Kunststoff ausgefüllt, sodass der Kern entfällt. Gemäß der ersten Ausführungsform bildet die gesamte aus Fig. 3 ersichtliche Achslenkeranordnung 10 ein einstückiges Verbundwerkstoffteil aus dem faserverstärktem Kunststoff.

Gemäß einer zweiten Ausführungsform der Aufhängevorrichtung ist die Achslenkeranordnung 10 aus zwei Achslenkerteilen zusammengesetzt, die bezüglich der Längs-Hoch-Ebene 22 spiegelsymmetrisch zueinander ausgebildet sind. Eines dieser Achslenkerteile 27 ist aus Fig. 5 ersichtlich, wobei zu der ersten Ausführungsform identische oder ähnliche Merkmale mit denselben Bezugszeichen wie bei der ersten Ausführungsform bezeichnet sind. Die Achslenkerteile 27 weisen jeweils einen der Lenkerarme 11, 12, eine der Streben 19, 20 und einen Teil 28 der achsseitigen Neben-Anbindungsstelle 21 der Achslenkeranordnung 10 auf und sind mit diesen Teilen 28 starr auf dem Achskörper 18 befestigt. Dabei liegen die Teile 28 direkt nebeneinander und bilden gemeinsam die Neben-Anbindungsstelle 21 der Achslenkeranordnung 10. Die Achslenkerteile 27 bestehen jeweils aus einem faserverstärktem Kunststoff und bilden gemäß der zweiten Ausführungsform jeweils ein einstückiges Verbundwerkstoffteil. Abgesehen davon ist die Achslenkeranordnung 10 gemäß der zweiten Ausführungsform im Wesentlichen identisch wie die Achslenkeranordnung gemäß der ersten Ausführungsform aufgebaut und kann diese ersetzen. Zur weiteren Beschreibung der zweiten Ausführungsform wird somit auf die Beschreibung der ersten Ausführungsform verwiesen.

### Bezugszeichen

- 1: Fahrzeug
- 2: Fahrzeugachse / Vorderachse
- 3: Fahrzeugachse / Hinterachse
- 4: Fahrzeugrahmen
- 5: Fahrzeugrad
- 6: Untergrund
- 7: Fahrtrichtung
- 8: Aufhängevorrichtung
- 9: Schwenkachse
- 10: Achslenkeranordnung
- 11: Lenkerarm
- 12: Lenkerarm
- 13: Loch im Lenkerarm
- 14: rahmenseitige Anbindungsstelle
- 15: rahmenfestes Lagerelement / Bolzen
- 16: Durchgangsloch im Lenkerarm
- 17: achsseitige Anbindungsstelle / Haupt-Anbindungsstelle
- 18: Achskörper
- 19: Strebe
- 20: Strebe
- 21: achsseitige Anbindungsstelle / Neben-Anbindungsstelle
- 22: Längs-Hoch-Ebene / Symmetrieebene
- 23: Federaufnahmebereich
- 24: Fahrzeugfeder
- 25: Dämpfer
- 26: Längslenker
- 27: Achslenkerteil
- 28: Teil der achsseitigen Neben-Anbindungsstelle
- 29: Faser
- 30: Kunststoff
- 31: Kern
- x: Fahrzeuglängsrichtung
- y: Fahrzeugquerrichtung
- z: Fahrzeughochrichtung

## Patentansprüche

1. Aufhängevorrichtung für eine Fahrzeugachse eines Fahrzeugs, mit einer mit zwei zueinander beabstandeten rahmenseitigen Anbindungsstellen (14) um eine Schwenkachse (9) schwenkbar an einem Fahrzeugrahmen (4) des Fahrzeugs (1) gelagerten und aus Faserverbundwerkstoff bestehenden Achslenkeranordnung (10), die mit zwei im Abstand zur Schwenkachse (9) vorgesehenen und zueinander beabstandeten achsseitigen Haupt-Anbindungsstellen (17) fest mit einem Achskörper (18) der Fahrzeugachse (3) verbunden ist, **dadurch gekennzeichnet, dass** die Achslenkeranordnung (10) zusätzlich mit wenigstens einer achsseitigen Neben-Anbindungsstelle (21) fest mit dem Achskörper (18) verbunden ist.

2. Aufhängevorrichtung nach Anspruch 1, **dadurch gekennzeichnet, dass** die Neben-Anbindungsstelle (21) zwischen den beiden achsseitigen Haupt-Anbindungsstellen (17) vorgesehen ist.

3. Aufhängevorrichtung nach einem der vorangehenden Ansprüche, **dadurch gekennzeichnet, dass** die Achslenkeranordnung (10) mit ihrer Neben-Anbindungsstelle (21) starr mit dem Achskörper (18) verbunden ist.

4. Aufhängevorrichtung nach einem der vorangehenden Ansprüche, **dadurch gekennzeichnet, dass** die Achslenkeranordnung (10) einteilig ausgebildet ist.

5. Aufhängevorrichtung nach einem der vorangehenden Ansprüche, **dadurch gekennzeichnet, dass** die Achslenkeranordnung (10) aus zwei separaten Achslenkerteilen (27) zusammengesetzt ist, die bezüglich einer quer zur Schwenkachse (9) und durch die Neben-Anbindungsstelle (21) verlaufenden Symmetrieebene (22) zueinander spiegelsymmetrisch ausgebildet sind.

6. Aufhängevorrichtung nach einem der vorangehenden Ansprüche, **dadurch gekennzeichnet, dass** die Achslenkeranordnung (10) zwei zueinander beabstandete und sich quer zur Schwenkachse (9) erstreckende Lenkerarme (11, 12) und zwei schräg oder quer zu diesen verlaufende Streben (19, 20) aufweist, die sich jeweils von einem der Lenkerarme (11, 12) bis zu der Neben-Anbindungsstelle (21) erstrecken, wobei jeder der Lenkerarme (11, 12) eine der rahmenseitigen Anbindungsstellen (14) und eine der achsseitigen Haupt-Anbindungsstellen (17) umfasst.

7. Aufhängevorrichtung nach den Ansprüchen 5 und 6, **dadurch gekennzeichnet, dass** die Achslenkerteile (27) jeweils einen der Lenkerarme (11), eine der Streben (19) und einen Teil (28) der Neben-Anbindungsstelle (21) umfassen.

8. Aufhängevorrichtung nach Anspruch 6 oder 7, **dadurch gekennzeichnet, dass** die Streben (19, 20) im Bereich der Neben-Anbindungsstelle (21) ineinander übergehen und/oder fest miteinander verbunden sind.

9. Aufhängevorrichtung nach einem der vorangehenden Ansprüche, **dadurch gekennzeichnet, dass** die Achslenkeranordnung (10) an den Haupt-Anbindungsstellen (17) Durchgangslöcher (16) aufweist, durch welche sich der Achskörper (18) hindurch erstreckt.

10. Aufhängevorrichtung nach einem der vorangehenden Ansprüche, **dadurch gekennzeichnet, dass** der Faserverbundwerkstoff ein Faser-Kunststoff-Verbund (29, 30) ist.

11. Aufhängevorrichtung nach einem der vorangehenden Ansprüche, **gekennzeichnet durch** wenigstens einen an dem Achskörper (18) befestigten zusätzlichen Längslenker (26), der im Abstand zum Achskörper (18) am Fahrzeugrahmen (4) angelenkt ist.

## Claims

1. Suspension apparatus for a vehicle axle of a vehicle, having an axle guide arrangement (10) which consists of fibre composite material, is mounted on a vehicle frame (4) of the vehicle (1) such that it can be pivoted about a pivot axis (9) by way of two frame-side attachment points (14) which are spaced apart from one another, and is connected fixedly to an axle beam (18) of the vehicle axle (3) by way of two axle-side main attachment points (17) which are spaced apart from one another and are provided at a spacing from the pivot axis (9), **characterized in that** the axle guide arrangement (10) is additionally connected fixedly to the axle beam (18) by way of at least one axle-side auxiliary attachment point (21).

2. Suspension apparatus according to Claim 1, **characterized in that** the auxiliary attachment point (21) is provided between the two axle-side main attachment points (17).

3. Suspension apparatus according to either of the preceding claims, **characterized in that** the axle guide arrangement (10) is connected rigidly by way of its auxiliary attachment point (21) to the axle beam (18).

4. Suspension apparatus according to one of the preceding claims, **characterized in that** the axle guide arrangement (10) is configured in one piece.

5. Suspension apparatus according to one of the preceding claims, **characterized in that** the axle guide arrangement (10) is assembled from two separate axle guide parts (27) which are of mirror-symmetrical configuration with respect to one another with regard to a plane of symmetry (22) which runs transversely with respect to the pivot axis (9) and through the auxiliary attachment point (21).

6. Suspension apparatus according to one of the preceding claims, **characterized in that** the axle guide arrangement (10) has two control arms (11, 12) which are spaced apart from one another and extend transversely with respect to the pivot axis (9) and two struts (19, 20) which run obliquely or transversely with respect thereto and extend in each case from one of the control arms (11, 12) as far as the auxiliary attachment point (21), each of the control arms (11, 12) comprising one of the frame-side attachment points (14) and one of the axle-side main attachment points (17).

7. Suspension apparatus according to Claims 5 and 6, **characterized in that** the axle guide parts (27) comprise in each case one of the control arms (11), one of the struts (19) and one part (28) of the auxiliary attachment point (21).

8. Suspension apparatus according to Claim 6 or 7, **characterized in that** the struts (19, 20) merge into one another in the region of the auxiliary attachment point (21) and/or are connected fixedly to one another.

9. Suspension apparatus according to one of the preceding claims, **characterized in that** the axle guide arrangement (10) has through holes (16) at the main attachment points (17), through which through holes (16) the axle beam (18) extends.

10. Suspension apparatus according to one of the preceding claims, **characterized in that** the fibre composite material is a fibre/plastic composite (29, 30).

11. Suspension apparatus according to one of the preceding claims, **characterized by** at least one additional trailing arm (26) which is fastened to the axle beam (18) and is articulated on the vehicle frame (4) at a spacing from the axle beam (18).

## Revendications

1. Dispositif de suspension pour un essieu de véhicule d'un véhicule, avec un ensemble de guide d'essieu (10) avec deux points de liaison côté châssis (14) espacés l'un de l'autre, monté de façon pivotante autour d'un axe de pivotement (9) sur un châssis de véhicule (4) du véhicule (1) et composé d'un matériau composite contenant des fibres, qui est relié de façon fixe à un corps d'essieu (18) de l'essieu de véhicule (3) avec deux points de liaison principaux côté essieu (17) prévus à distance de l'axe de pivotement (9) et espacés l'un de l'autre, **caractérisé en ce que** l'ensemble de guide d'essieu (10) est en outre assemblé de façon fixe au corps d'essieu (18) avec au moins un point de liaison auxiliaire côté essieu (21).

2. Dispositif de suspension selon la revendication 1, **caractérisé en ce que** le point de liaison auxiliaire (21) est prévu entre les deux points de liaison principaux côté essieu (17).

3. Dispositif de suspension selon l'une quelconque des revendications précédentes, **caractérisé en ce que** l'ensemble de guide d'essieu (10) est relié de façon rigide au corps d'essieu (18) avec son point de liaison auxiliaire (21).

4. Dispositif de suspension selon l'une quelconque des revendications précédentes, **caractérisé en ce que** l'ensemble de guide d'essieu (10) est réalisé en une seule pièce.

5. Dispositif de suspension selon l'une quelconque des revendications précédentes, **caractérisé en ce que** l'ensemble de guide d'essieu (10) est composé de deux parties de guide d'essieu séparées (27), qui sont réalisées sous forme symétrique l'une à l'autre par rapport à un plan de symétrie (22) s'étendant transversalement à l'axe de pivotement (9) et passant par le point de liaison auxiliaire (21).

6. Dispositif de suspension selon l'une quelconque des revendications précédentes, **caractérisé en ce que** l'ensemble de guide d'essieu (10) présente deux bras oscillants (11, 12) espacés l'un de l'autre et s'étendant transversalement à l'axe de pivotement (9) et deux entretoises (19, 20) s'étendant en oblique ou transversalement à ceux-ci, qui s'étendent respectivement d'un des bras oscillants (11, 12) jusqu'au point de liaison auxiliaire (21), dans lequel chacun des bras oscillants (11, 12) comprend un des points de liaison côté châssis (14) et un des points de liaison côté essieu (17).

7. Dispositif de suspension selon les revendications 5 et 6, **caractérisé en ce que** les parties de guide d'essieu (27) comprennent respectivement un des bras oscillants (11), une des entretoises (19) et une partie (28) du point de liaison auxiliaire (21).

8. Dispositif de suspension selon la revendication 6 ou 7, **caractérisé en ce que** les entretoises (19, 20) se prolongent l'une dans l'autre dans la région du point de liaison auxiliaire (21) et/ou sont reliées l'une à l'autre de façon fixe.

9. Dispositif de suspension selon l'une quelconque des revendications précédentes, **caractérisé en ce que** l'ensemble de guide d'essieu (10) présente aux points de liaison principaux (17) des trous de passage (16), à travers lesquels s'étend le corps d'essieu (18).

10. Dispositif de suspension selon l'une quelconque des revendications précédentes, **caractérisé en ce que** le matériau composite contenant des fibres est un composite de matière plastique et de fibres (29, 30).

11. Dispositif de suspension selon l'une quelconque des revendications précédentes, **caractérisé par** au moins un bras oscillant longitudinal supplémentaire (26) fixé au corps d'essieu (18), qui est articulé au châssis de véhicule (4) à distance du corps d'essieu (18).
